(19) Europäisches Patentamt / European Patent Office / Office européen des brevets

(11) **EP 2 217 944 B1**

(12) **FASCICULE DE BREVET EUROPEEN**

(45) Date de publication et mention de la délivrance du brevet:
**04.03.2015 Bulletin 2015/10**

(21) Numéro de dépôt: **08848654.3**

(22) Date de dépôt: **12.11.2008**

(51) Int Cl.:
*G01S 13/88* (2006.01)    *G01S 7/02* (2006.01)
*G01S 7/41* (2006.01)

(86) Numéro de dépôt international:
**PCT/EP2008/065361**

(87) Numéro de publication internationale:
**WO 2009/062946 (22.05.2009 Gazette 2009/21)**

(54) **DISPOSITIF DE DETECTION D'OBJETS, NOTAMMENT D'OBJETS DANGEREUX**

EINRICHTUNG ZUM DETEKTIEREN VON OBJEKTEN, INSBESONDERE GEFÄHRLICHEN OBJEKTEN

DEVICE FOR DETECTING OBJECTS, PARTICULARLY DANGEROUS OBJECTS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.11.2007 FR 0707968**

(43) Date de publication de la demande:
**18.08.2010 Bulletin 2010/33**

(73) Titulaires:
• **Chekroun, Claude**
  **91190 Gif sur Yvette (FR)**
• **Chekroun, Gilles**
  **91190 Gif sur Yvette (FR)**

(72) Inventeurs:
• **Chekroun, Claude**
  **91190 Gif sur Yvette (FR)**
• **Chekroun, Gilles**
  **91190 Gif sur Yvette (FR)**

(74) Mandataire: **Lucas, Laurent Jacques**
  **Marks & Clerk France**
  **Conseils en Propriété Industrielle**
  **Immeuble Visium**
  **22, Avenue Aristide Briand**
  **94117 Arcueil Cedex (FR)**

(56) Documents cités:
WO-A2-2009/053960    FR-A- 2 841 387
FR-A- 2 864 307    FR-A- 2 886 413
US-A- 5 501 222    US-A1- 2006 198 004
US-A1- 2007 052 576    US-B1- 7 034 746
US-B1- 7 170 440

• GUMBMANN F ET AL: "Optimization of a fast scanning millimetre-wave short range SAR imaging system" EURAD 2007 10-12 OCT. 2007 . PROCEEDINGS 4TH EUROPEAN RADAR CONFERENCE IEEE PISCATAWAY, NJ, USA, 10 octobre 2007 (2007-10-10), pages 24-27, XP002484675 ISBN: 978-2-87487-004-0
• HUE PHAT TRAN ET AL: "A Fast Scanning W-Band System for Advanced Millimetre-Wave Short Range Imaging Applications" RADAR CONFERENCE, 2006. 3RD EUROPEAN, IEEE, PI, 1 septembre 2006 (2006-09-01), pages 146-149, XP031006005 ISBN: 978-2-9600551-7-7

**Description**

La présente invention concerne un dispositif de détection d'objets. Elle s'applique notamment pour la détection d'armes ou d'explosifs portés par des personnes.

La sécurité des biens et des personnes nécessite des outils de plus en plus performants en regard des menaces potentiellement toujours plus nombreuses et plus destructrices. Des dispositifs de sécurité, en particulier de détection d'armes ou d'explosifs doivent ainsi être installés dans les lieux publics tels que notamment les aéroports, les gares, les stations de métro, les lieux de conférences ou de salon, les palais de justice ou encore les ambassades.

Une solution de détection connue utilise un scanner passif qui capte les radiations électromagnétiques, notamment dans la bande de fréquences W. Le scanner analyse l'image thermique et affiche sur l'écran d'un utilisateur l'emplacement de l'élément à risque détecté. En effet, le corps d'une personne émet beaucoup des radiations dans cette bande de fréquences fonction de la température de l'objet à détecter. Le scanner peut ainsi détecter le contraste en température avec des objets ayant une constitution différente, fabriqués en métal, plastique, céramique ou encore en matériau composite, et qui sont souvent utilisés pour la fabrication d'armes ou d'explosifs. Ces objets contrastent fortement avec l'image de la personne. Une autre solution connue est un scanner électronique, actif, qui fonctionne selon un procédé d'holographie.

De tels dispositifs, passifs ou actifs, sont coûteux et complexes. Ils ne peuvent donc pas être installés en grande quantité, notamment dans les lieux publics dont les conditions de sécurités nécessitent de quelques centaines d'équipements à plusieurs milliers.

Un document US 5 501 222 A décrit un système d'imagerie pour détecter des objets portés par un individu.

Un but de l'invention est notamment de permettre la réalisation d'un dispositif de détections d'objets, représentés par un ou plusieurs dièdres, efficace et économique. A cet effet, l'invention a pour objet un dispositif de détection tel que décrit par les revendications.

L'invention a également pour objet un système de détection comportant plusieurs dispositifs tels que décrits par les revendications.

D'autres caractéristiques et avantages de l'invention apparaîtront à l'aide de la description qui suit faite en regard de dessins annexés qui représentent :

- la figure 1, une illustration du principe de réalisation d'un dispositif selon l'invention ;
- les figures 2a et 2b, respectivement une vue en coupe et une vue de face d'un exemple de réalisation d'un dispositif selon l'invention ;
- la figure 3, un exemple de réalisation d'un émetteur utilisé dans un dispositif selon l'invention ;
- la figure 4, un exemple de conditionnement d'un dispositif selon l'invention ;
- la figure 5, une illustration des positions relatives des antennes d'émission et de réception et leurs polarisations associées ;
- les figures 6a et 6b, une illustration de changements de polarisations lors de réflexions sur un dièdre ou une surface plane ;
- la figure 7, un exemple de réalisation d'un module d'émission et de réception utilisé dans un dispositif selon l'invention ;
- la figure 8, une illustration du principe de fonctionnement du scanner formé par la rotation d'un récepteur dans un dispositif selon l'invention ;
- les figures 9a et 9b, respectivement une illustration de la résolution transversale et du rapport signal sur bruit lors d'une détection ;
- la figure 10, un exemple de réalisation d'un système de détection utilisant plusieurs dispositifs selon l'invention.

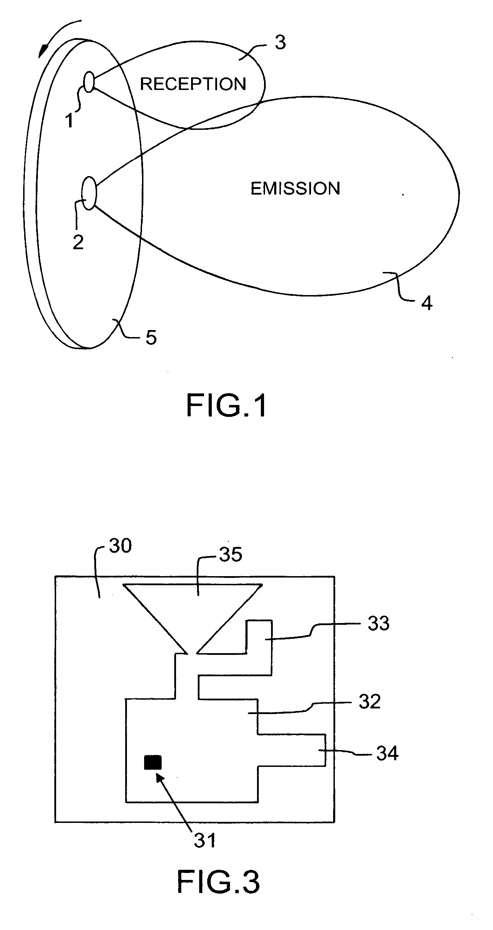

La figure 1 illustre le principe de réalisation d'un dispositif selon l'invention. Il comporte un récepteur hyperfréquence 1 en rotation autour d'un point sur lequel est situé un émetteur hyperfréquence 2. Ce dispositif produit donc un faisceau de réception 3 en rotation autour d'un faisceau d'émission 4.

Les positions du récepteur 1 et de l'émetteur 2 peuvent être inversées. Dans ce cas, le faisceau d'émission tourne autour du point central. Dans tous les cas, que l'émetteur soit mobile sur un cercle en rotation et le récepteur soit en un point fixe, ou que le récepteur soit mobile sur un cercle en rotation et que l'émetteur soit en un point fixe, l'émetteur a un mouvement relatif de rotation par rapport au récepteur.

Le récepteur 1 est par exemple fixé sur un disque 5 adapté pour se mouvoir en rotation, de préférence à faible moment d'inertie. L'émetteur 2 est par exemple fixée sur l'axe de rotation du disque 5, de façon à tourner par exemple sur lui-même.

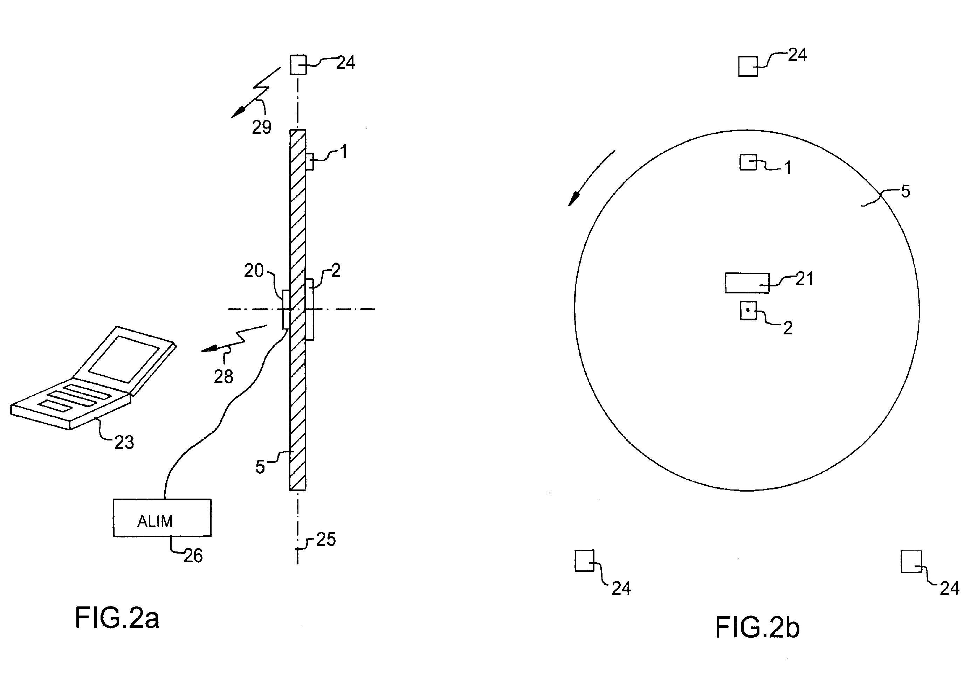

Les figures 2a et 2b présentent respectivement une vue en coupe et une vue de face d'un exemple particulier de réalisation d'un dispositif selon l'invention. Le disque 5 est par exemple réalisé dans un matériau du type DVD, ou disque laser, ayant avantageusement un moment d'inertie faible. Son diamètre peut être de l'ordre de 20 à 60 centimètres par exemple. Le diamètre dépend notamment de la distance du récepteur 1 au centre.

Le disque 5 est entraîné en rotation classiquement par un moteur 20. Ce moteur est par exemple un moteur synchrone sans balais dit « Brushless ». Il est monté sur le disque. La vitesse de rotation peut aller de quelques tours par secondes jusqu'à quelques dizaines de tours par seconde. La vitesse de rotation peut être contrôlée par un asservissement, utilisant par exemple des capteurs à effet Hall ou des capteurs laser pour capter la position angulaire du disque. L'énergie électrique est fournie au moteur 20 par un bloc d'alimentation électrique 26.

L'émetteur 2 utilise par exemple une diode de type Gunn couplé à une antenne de type patch. Il émet par exemple selon deux polarisations circulaires inverses, dans la bande de fréquence W. Le récepteur 1 comporte par exemple le même type d'antenne que celle de l'émetteur 2.

A proximité de l'émetteur, près du centre du disque 5, sont par exemple fixés les circuits d'émission et de réception 21 qui seront décrits par la suite. Ces circuits comportent des convertisseurs analogique-numérique qui convertissent les signaux reçus au format numérique. Ces derniers sont ensuite envoyés par exemple par une liaison sans fil 28, type WiFi, vers une unité centrale 23 qui peut être un ordinateur équipé des moyens nécessaires au traitement et à l'analyse des signaux reçus.

Dans un mode de réalisation particulier, le dispositif peut contenir deux récepteurs 2, l'un étant par exemple situé à la périphérie du disque et l'autre à une distance plus proche du centre. Cela donne des angles d'observation légèrement différents, ce qui a notamment pour effet d'améliorer le rapport signal sur bruit en décorrélant les lobes secondaires d'antenne du lobe principal. Un commutateur relie entre les antennes de réception de chacun des deux récepteurs pour permettre l'utilisation de l'un ou de l'autre récepteur.

Des télémètres laser 24, fixes, sont par exemple disposés autour du disque 5 en rotation. Ces télémètres 24, au moins au nombre de trois, permettent classiquement de calculer par une méthode de triangulation la distance d'un individu par rapport au plan 25 dans lequel sont situés l'émetteur 2 et le récepteur 1, un objet à détecter pouvant être porté par l'individu. Une fois cette information de distance connue, les moyens de détection radar, comportant l'émetteur 2 et le récepteur 1 peuvent ensuite focaliser la détection sur cette distance. En d'autres termes, un plan dans lequel se situe l'individu est déterminé puis le dispositif focalise la détection dans ce plan. Ce plan ou se situe l'individu peut être à une distance d'un mètre à plusieurs mètres. La précision obtenue peut être inférieure à un centimètre. Les mesures effectuées par les télémètres sont par exemple transmises aux moyens de traitement 23 par une liaison sans fil 29. Les distances sont classiquement obtenues par des méthodes de triangulation.

La figure 3 illustre un exemple de réalisation de l'émetteur 2 à base de diode gunn. Plus particulièrement la figure 3 présente la source hyperfréquence formée de la diode gunn 31. La diode gunn est implantée sur un patch métallisée 32, conduisant à la fois l'alimentation électrique et propageant l'onde hyperfréquence. A cet effet la piste comporte un bras 33 destinée à être reliée à un circuit d'alimentation électrique et un bras 34 fournissant le signal de sortie hyperfréquence à destination d'un récepteur. La piste comporte par ailleurs un adaptateur quart d'onde sur le bras d'alimentation pour empêcher l'onde hyperfréquence produite par la diode de se propager vers l'alimentation électrique. La piste 31 est fixée sur un substrat 30 diélectrique lui-même implanté sur le disque 5.

La diode gunn 31 est alimentée par un circuit électrique connecté au bras d'alimentation 33. Ce circuit est par exemple relié électriquement au bloc d'alimentation 26 par un joint tournant conducteur. La tension et le courant produits pour la diode gunn sont respectivement de l'ordre de 1 à 2 volts et de 200 milliampères par exemple.

L'antenne d'émission, de type pastille ou patch, émet selon une polarisation. Elle est fixée sur le disque 5 à proximité du substrat 30 supportant la diode gunn. Un rotateur de polarisation composé de trois grilles de fils continus orientés à 45° de la polarisation linéaire transforme cette polarisation linéaire en polarisation circulaire. Pour l'antenne de réception, le patch reçoit selon les deux polarisations. Le même rotateur transforme la polarisation circulaire incidente selon l'une des deux polarisations selon qu'elle est circulaire gauche ou circulaire droite.

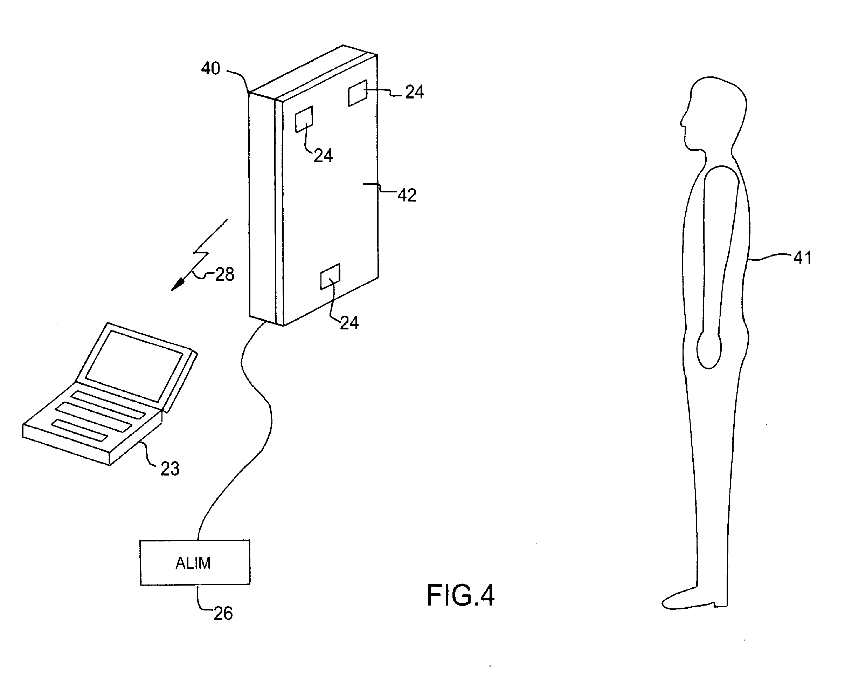

La figure 4 présente un individu 41 face à un dispositif de détection selon l'invention. Le disque 5 équipé des moyens de détection radar 1, 2 est placé dans un boîtier 40 dont la face avant est fermée par un radôme 42 laissant passer les ondes électromagnétiques. Les télémètres lasers 24 sont installé sur la face avant. Le boîtier est de forme carrée aplatie, son épaisseur peut être de l'ordre de 5 centimètres et ses côtés de l'ordre de 25 à 50 centimètres selon les dimensions requises pour le disque 5.

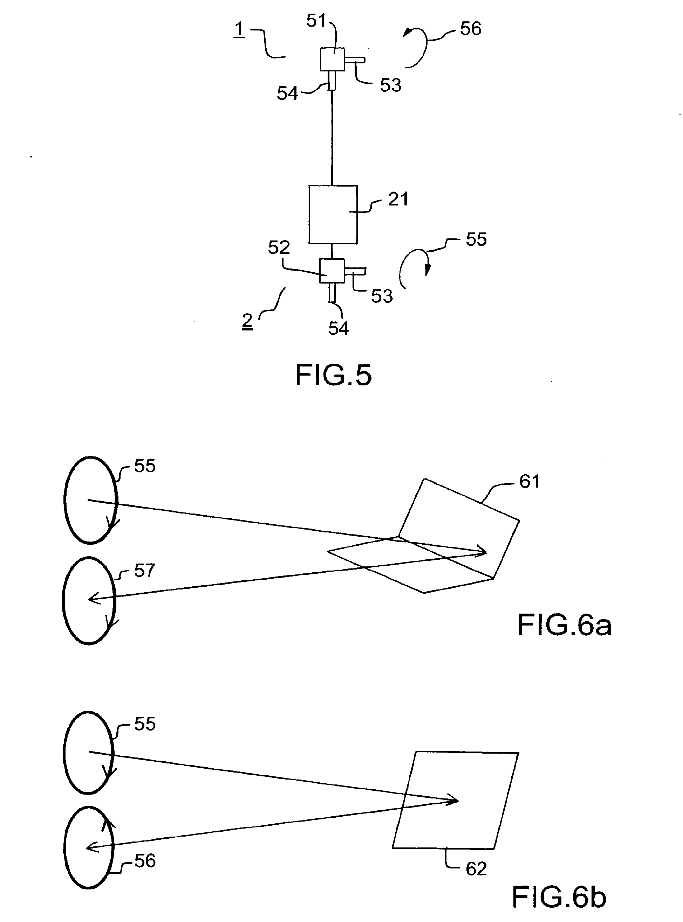

La figure 5 illustre les positions relatives des moyens de détection radar. L'émetteur 2 est représenté par son antenne patch 52 et le récepteur 1 est représenté par son antenne patch 51. Chaque antenne possède deux voies de polarisation 53, 54. Les deux antennes 51, 52 sont de formes analogues et ont leurs voies de polarisations 53, 54 orientées selon les mêmes directions. Elles sont reliées aux circuits d'émission et de réception 21.

Sur l'exemple de la figure 5 une onde à polarisation circulaire droite 55 est transmise par l'antenne d'émission vers une cible puis l'onde réfléchie est reçue par l'antenne de réception selon une polarisation circulaire gauche 56. Selon la nature de la surface réfléchissante la polarisation est inversée ou non. L'invention exploite avantageusement cette propriété. En particulier, dans le cas où l'onde est réfléchie par un dièdre, la polarisation n'est pas inversée, alors qu'elle l'est pour la réflexion produite par une plaque.

La figure 6a montre l'émission d'une onde circulaire droite 55 réfléchie par un dièdre 61, l'onde réfléchie reçue conserve la polarisation circulaire droite 55. Dans ce cas l'antenne de réception reçoit le signal réfléchi sur sa voie de polarisation circulaire droite 53.

La figure 6b montre l'émission d'une onde circulaire droite 55 réfléchie par une surface plane 62, l'onde réfléchie a une polarisation inversée, circulaire gauche 57. Dans ce cas, l'antenne de réception reçoit le signal réfléchi sur sa voie de polarisation circulaire 54. La détection selon l'une ou l'autre voie permet ainsi de détecter la nature de la surface réfléchissante.

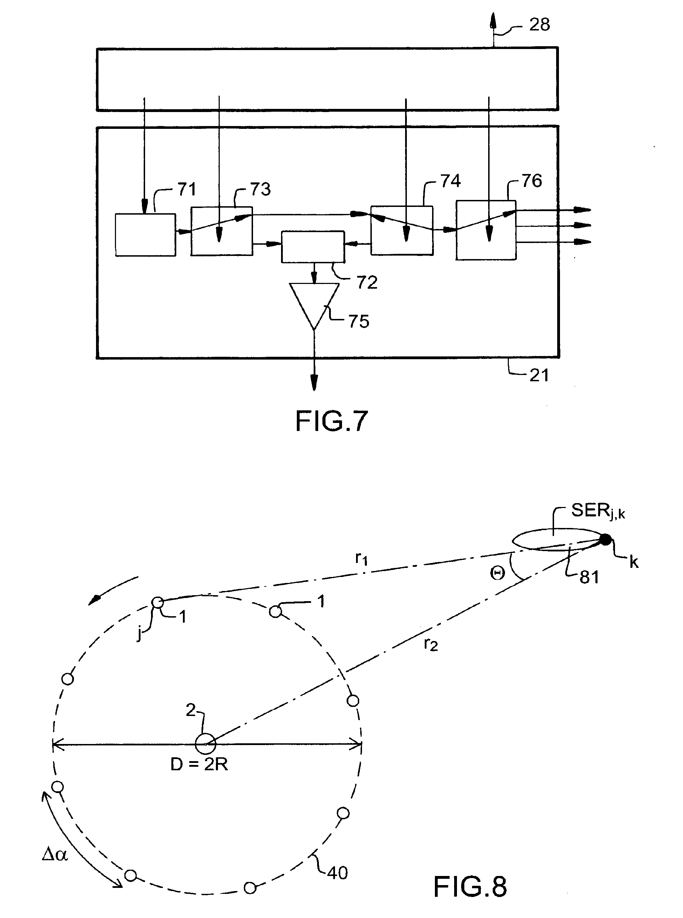

La figure 7 illustre un mode de réalisation particulier d'un module d'émission et de réception 21 susceptible d'être utilisé dans un dispositif selon l'invention.

Ce module 21 comporte un oscillateur local 71, fournissant par exemple une fréquence de 77 GHz. Dans le mode réception, l'oscillateur local est relié à un mélangeur 72 via un premier commutateur 73. Dans ce cas, le signal reçu est dirigé via un deuxième commutateur 74 vers le mélangeur. La sortie du mélangeur est reliée à l'entrée d'un amplificateur faible bruit 75, le signal de sortie de cet amplificateur est ensuite envoyé, après conversion numérique, à l'unité centrale 23. Un circuit de sélection de faisceau 76 est relié aux antennes d'émission 52 et de réception 52. Le module comporte un bloc électronique effectuant notamment le contrôle des composants précités, la conversion analogique numérique des signaux reçus et l'envoi des données numérisées à destination de l'unité centrale 23 par la liaison sans fil 28.

La figure 8 illustre le fonctionnement d'un dispositif selon l'invention pour la détection des formes des objets à détecter. La présentation est faite pour le récepteur 1 en rotation. Le résultat obtenu est le même dans le cas d'un émetteur en rotation. La figure 8 présente donc un récepteur 1 en rotation, la sur un cercle 40 de diamètre D = 2R. A intervalles de temps réguliers $\Delta T$ définissant un pas d'angle $\Delta\alpha$ entre deux positions successives du récepteur 1 sur le cercle 40, un signal est émis par l'émetteur 2.

Un ensemble de récepteurs disposés le long du cercle 40 est alors reconstitué dans le temps comme dans une application de type SAR notamment, permettant ainsi la détection de formes simples. En effet, à partir des points brillants détectés, une reconstitution de signal est effectuée permettant de détecter notamment des dièdres de faibles dimensions. Même s'il n'est pas toujours possible de reconstituer la forme entière d'un objet comportant le ou les dièdres détectés, cela n'est pas gênant pour l'application pratique de l'invention. En effet, la détection d'un ou plusieurs dièdres réfléchissant pourra être considérée comme un indice sérieux de suspicion pour engager par exemple une fouille plus approfondie de l'individu les portant.

Un point brillant est ici un point ou une surface élémentaire réfléchissant les ondes électromagnétiques.

La figure 8 illustre la détection d'un point brillant k par réflexion d'un signal émis puis reçu par le récepteur 1 à une position j sur le cercle 40. Le point brillant k est à la distance $r_1$ de la source d'émission et à une distance $r_2$ du récepteur. Le signal $s_e$ émis en ce point est défini par son amplitude A et sa phase $\varphi$, $s_e$ peut donc être donné par la relation suivante :

$$s_e = Ae^{j\varphi} \qquad\qquad (1)$$

Le signal réfléchi reçu par le récepteur 2 subit le déphasage $\Delta\varphi$ suivant :

$$\Delta\varphi = e^{-jK(r_1+r_2)}e^{j2\pi.f_d t} \qquad\qquad (2)$$

où $K = 2\pi/\lambda$, $\lambda$ étant la longueur de l'onde émise et $f_d$ correspond au Doppler de l'émetteur en rotation, t étant le temps. $f_d$ est égal à $(2\pi RN/\lambda)\cos\theta(r_1)$, N étant le nombre de tours par seconde et $\theta(r_1)$ l'angle du point brillant et de la tangente au cercle au point de réception. La phase et l'amplitude du signal reçu sont mesurées en chaque point de réception j du cercle 40. Cette mesure est notamment fonction du gain à l'émission, l'amplitude A du signal émis, et du gain à la réception.

Comme indiqué précédemment l'utilisation d'une polarisation circulaire permet une analyse des deux polarisations réfléchies par la surface équivalente radar $SER_{j,k}$ au point k. Cette analyse, effectuée par exemple par les moyens de traitement équipant l'unité 23, permet de distinguer les dièdres des surfaces de réflexion planes, ou d'autres formes comme les trièdres. Les dièdres ou les discontinuités sont des éléments qui permettent d'identifier des objets, car ils délimitent notamment les objets.

La détection est bistatique dans la mesure où la source d'émission 2 n'est pas située au même endroit que la réception 1. Un élément d'objet situé au point k présente une surface équivalente radar $SER_{j,k}$ bistatique. Cette surface est dépendante de la polarisation. Son analyse permet de définir s'il s'agit ou non d'un dièdre. Les détections sont d'autant plus efficaces que le diagramme de rétrodiffusion 81 de la surface $SER_{j,k}$ recouvre le cercle 40 parcouru par le récepteur 1.

Les surfaces équivalentes radar $SER_{j,k}$ qui sont analysées sont de l'ordre de quelques centimètres carrés à quelques dizaines de centimètres carrés. Elles reflètent en fait les dimensions des objets que l'on cherche à détecter.

Il est donc nécessaire d'adapter les grandeurs physiques du dispositif selon l'invention pour obtenir une résolution transversale et une profondeur de champs du système d'émission / réception compatibles des dimensions de ces objets à détecter.

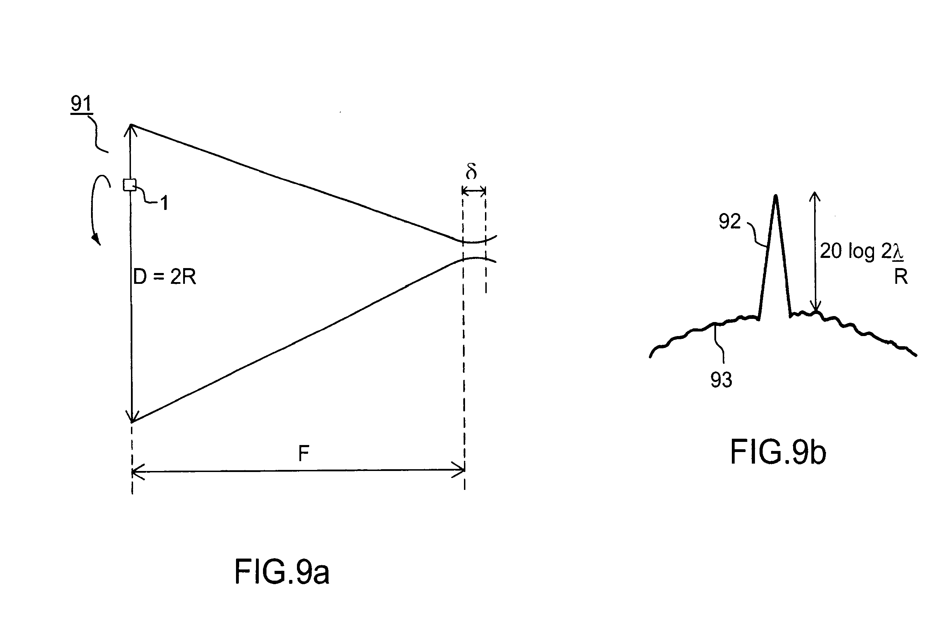

La figure 9a illustre la résolution transversale $\delta$. En ce qui concerne cette résolution transversale $\delta$ demandée, celle-ci détermine le diamètre D du cercle 40 précité, qui est aussi le diamètre D de la lentille de focalisation du scanner circulaire 91 formé de l'émetteur 2 couplé au récepteur 1 en rotation. Cette résolution $\delta$ est donnée par la relation suivante et contribue à définition la dimension D :

$$\delta = 2{,}44 . \lambda . \frac{F}{D} \qquad (3)$$

F étant la distance de focalisation.

La figure 9b illustre un signal détecté 92 et le rapport signal sur bruit 93, encore appelé rapport signal sur « clutter », obtenu lors de la détection d'un point brillant. Ce rapport S/B est défini par la relation suivante :

$$\frac{S}{B} = 2 \frac{\lambda}{R} + A_d \qquad (4)$$

où $A_d$ est un affinage Doppler.

La définition de la profondeur de champ $\delta_p$ contribue également à la définition dimension D de la lentille de focalisation ainsi qu'à la définition de l'épaisseur minimale $e_{min}$ des objets pouvant être détectés. Cette profondeur de champ est donnée par la relation suivante :

$$\delta_p = 3 . \left( \frac{F}{D} \right)^2 . \lambda \qquad (5)$$

La profondeur de champs $\delta_p$ et la vitesse de l'individu, en l'occurrence un piéton, contribuent par ailleurs à la détermination de la vitesse $\nu$ de rotation du récepteur 1.

Cette vitesse de rotation $N_R$ en nombre de tours par seconde, est donnée par la relation suivante :

$$N_R = \frac{\nu}{\delta_p} \qquad (6)$$

La phase $A_j$ et l'amplitude $\Phi_j$ mesurées sur signal $S_j$ reçu en une position j du récepteur 2 est la contribution des signaux reçus des points k réfléchissant le signal émis par l'émetteur 1 affecté du Doppler due à la rotation. Sur la figure 8 un seul point k est représenté. Ce signal $S_j$ est donné par la relation suivante, pour tous les points k :

$$S_j(t) = \sum_k \frac{\exp(jK.r_{j,k})}{r_{j,k}} . G\_emission_k . G\_reception_j . SER_{j,k} . e^{j2\pi . f_d(t).t} \qquad (7)$$

où:

- exp est la fonction exponentielle ;
- G_emission$_k$ est le gain d'émission du signal émis vers le point k ;
- G_reception$_j$ est le gain à la réception à la position j ;
- r$_{j,k}$ est somme de la distance parcourue par l'onde transmise puis réfléchie par le point k, jusqu'à la position j du récepteur, dans l'exemple de la figure 8, r$_{j,k}$ = r$_1$ + r$_2$ ;
- K = 2π/λ comme indiqué précédemment ;
- SER$_{j,k}$ au point k est la surface équivalente radar bistatique vue du récepteur comme décrit précédemment ;

- $f_d(t) = \dfrac{2\pi N_1 R}{\lambda} \cos(\theta(x,y,t))$, θ(x,y,t) est l'angle formé entre le vecteur relatif à la direction d'arrivée sur le cercle d'analyse et la tangente au point de réception.

Le signal S$_j$ est calculé pour une polarisation donnée, par exemple pour la polarisation circulaire droite émise. Selon la nature de la surfaces aux points k, S$_j$ comporte une polarisation circulaire droite ou gauche.

L'analyse du signal reçu, selon les deux polarisations circulaires, permet de déterminer si la SER correspond à une surface plane ou à un dièdre. A partir de la détermination de plaques planes et de dièdres les moyens de traitement 23 peuvent parvenir à reconstituer une forme d'objet ou un début de forme. L'information de forme obtenue est dans tous les cas suffisante pour suggérer par exemple une fouille plus approfondie du porteur de l'objet. La détection de dièdres et de discontinuités permet avantageusement de détecter des objets notamment dangereux. En particulier,

- ils délimitent les objets comme indiqué précédemment ;
- la détection se fait en dehors du clutter, par la polarisation inverse ;
- la rétrodirectivité est totale ou partielle pour les dièdres.

Les dimensions des dièdres détectés, de l'ordre de deux à quatre longueurs d'onde, sont bien adaptées à la fréquence d'émission à 77 GHz.

La formation d'image au niveau des moyens de traitement s'effectue par l'intégration des répliques des signaux émis. Une image Im(x, y) est ainsi obtenue selon la relation suivante :

$$\mathrm{Im}(x,y) = \int_0^{\frac{N}{N_1}} S_j(t).r\acute{e}plique(x,y,t).dt \qquad (8)$$

x et y représentent les coordonnées d'un point k dans le plan de focalisation à un instant t, N est un nombre de tours.

S$_j$(t) a été calculé par la relation (7). L'intégration est faite pour toutes les positions j du cercle, chaque composante S$_j$(t) étant multipliée par les répliques de tous les signaux reçus, le terme « réplique(x, y, t) » formant la somme de tous ces signaux. La réplique d'un signal un signal qui comporte la même phase en valeur absolue, mais inversée. Il est à noter que le temps exprimé par cosθ dépend de la position du point brillant et contribue à la « coloration de l'espace » et par là-même à une meilleure résolution. Cette résolution spatiale est très nettement améliorée, en intégrant le signal Doppler sur plusieurs tours N$_1$.

Les phases des signaux reçus sont a priori inconnus. La multiplication par les répliques ainsi définies permet de mettre évidence les signaux détectés comme celui illustré par la figure 9b.

L'image Im(x, y) reconstituée, comme dans un radar de type SAR notamment, donne une vision totale ou partielle d'un objet détecté. En fonction de la forme visualisée, par exemple au niveau de l'écran d'un ordinateur 23, un utilisateur peut ou non décider de fouiller l'individu portant cet objet.

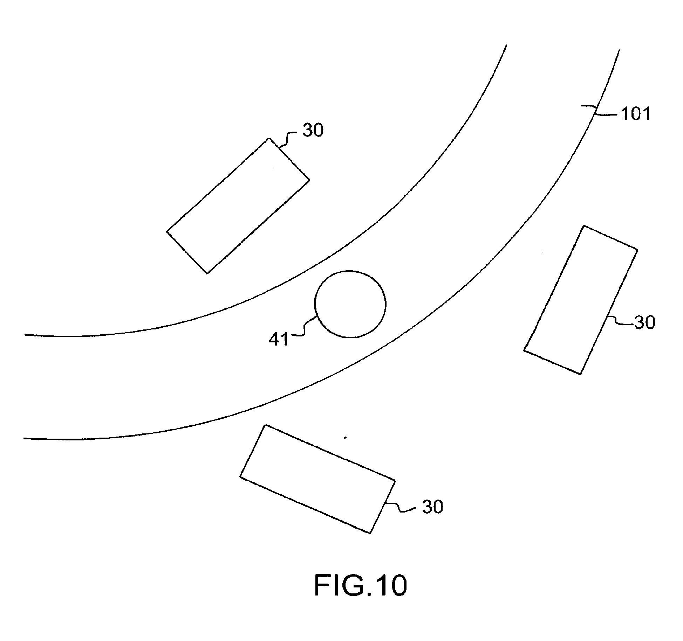

La figure 10 illustre un système de détection comportant plusieurs dispositif selon l'invention tel que décrit précédemment. Ce système équipe par exemple un sas de protection. Ce sas peut être installé pour filtrer des entrées dans plusieurs types de lieux publics tels que les aéroports par exemple. Le système comporte par exemple trois dispositifs de détection, représentés par leurs boîtiers 30. Les dispositifs sont répartis en cercle, par exemple uniformément. La détection se fait alors entre ces boîtiers qui permettent une détection complète sur un individu.

Les individus 41 peuvent être entraînés par un tapis roulant 101 passant entre les dispositifs 30, dont la vitesse v est bien déterminée. Avantageusement, une détection selon l'invention ne nécessite pas un arrêt ou un stationnement de l'individu au niveau des dispositifs 30. Cela permet un flux continu des personnes à surveiller, par exemple les passagers d'un avion.

**Revendications**

1. Dispositif de détection d'au moins un objet porté par un individu (41), comportant au moins un émetteur de signaux (2) et un récepteur de signaux (1), ledit récepteur (1) effectue un mouvement de rotation relatif autour de l'émetteur (2), un signal étant émis en direction de l'individu (41) pour plusieurs positions (j) du récepteur sur le cercle de rotation relative (40), les signaux réfléchis par des points (k) d'un objet et reçus par le récepteur (2) aux positions (j) étant fournis à des moyens de traitement (23) pour former une image radar (Im (x, y)), **caractérisé en ce que** les signaux étant des signaux hyperfréquence, ledit dispositif comporte des télémètres laser (24), situés autour de l'émetteur (2) et du récepteur (1) en rotation, pour déterminer la distance de l'individu (41) au dispositif, le signal émis par l'émetteur étant focalisé dans un plan contenant l'individu

2. Dispositif de détection d'au moins un objet porté par un individu (41), comportant au moins un émetteur de signaux (2) et un récepteur de signaux (1), ledit émetteur (2) effectue un mouvement de rotation relatif autour du récepteur (1), un signal étant émis en direction de l'individu (41) pour plusieurs positions (j) du récepteur sur le cercle de rotation relative (40), les signaux réfléchis par des points (k) d'un objet et reçus par le récepteur (2) aux positions (j) étant fournis à des moyens de traitement (23) pour former une image radar (Im (x, y)), **caractérisé en ce que** les signaux étant des signaux hyperfréquence, ledit dispositif comporte des télémètres laser (24), situés autour de l'émetteur (2) et du récepteur (1) en rotation, pour déterminer la distance de l'individu (41) au dispositif, le signal émis par l'émetteur étant focalisé dans un plan contenant l'individu

3. Dispositif selon la revendication 1, **caractérisé en ce que** le récepteur (1) est fixé sur un disque (5) en rotation à une distance donnée du centre du disque, l'émetteur (2) étant situé sensiblement au centre du disque.

4. Dispositif selon la revendication 2, **caractérisé en ce que** l'émetteur (2) est fixé sur un disque (5) en rotation à une distance donnée du centre du disque, le récepteur (1) étant situé sensiblement au centre du disque.

5. Dispositif selon l'une quelconque des revendications précédentes,, **caractérisé en ce que** l'émetteur (2) émet selon deux polarisations (53, 54), la nature d'un objet étant définie en fonction de la polarisation des signaux réfléchis.

6. Dispositif selon l'une quelconque des revendications précédentes, **caractérisé en ce que** la source d'émission (1) émet dans la bande des fréquences millimétriques.

7. Dispositif selon la revendication 6, **caractérisé en ce que** la source émet à la fréquence de 77 GHz.

8. Dispositif selon l'une quelconque des revendications 3 à 7, **caractérisé en ce que** le disque est du type disque laser.

9. Dispositif selon l'une quelconque des revendications 3 à 8, **caractérisé en ce que** le disque est entraîné en rotation par un moteur synchrone (2) sans balais.

10. Dispositif selon l'une quelconque des revendications précédentes, **caractérisé en ce que** l'émetteur (2) comporte comme source d'émission une diode de type gunn.

11. Système de détection d'objets portés par un individu, **caractérisé en ce qu'**il comporte au moins deux dispositifs (30) selon l'une quelconque des revendications précédentes.

12. Système selon la revendication 11, **caractérisé en ce qu'**il comporte trois dispositifs (30) répartis en cercle, la détection se faisant à l'intérieur du cercle.

**Patentansprüche**

1. Vorrichtung zum Erkennen von wenigstens einem von einer Person (41) getragenen Objekt, die wenigstens einen Signalsender (2) und einen Signalempfänger (1) umfasst, wobei der Empfänger (1) eine relative Drehbewegung um den Sender (2) ausführt, wobei ein Signal in Richtung auf die Person (41) für mehrere Positionen (j) des Empfängers auf dem relativen Drehkreis (40) gesendet wird, wobei die von Punkten (k) eines Objekts reflektierten und vom Empfänger (2) an den Positionen (j) empfangenen Signale zu Verarbeitungsmitteln (23) zum Bilden eines Radarbildes (Im (x, y)) gespeist werden, **dadurch gekennzeichnet, dass** die Signale Mikrowellensignale sind, wobei die Vorrichtung Laser-Entfernungsmesser (24) umfasst, die sich um den Sender (2) und den Empfänger (1) in Rotation befinden, zum Ermitteln der Distanz zwischen der Person (41) und der Vorrichtung, wobei das vom Sender gesendete Signal in einer Ebene fokussiert wird, in der sich die Person befindet.

2. Vorrichtung zum Erkennen von wenigstens einem von einer Person (41) getragenen Objekt, die wenigstens einen Signalsender (2) und einen Signalempfänger (1) umfasst, wobei der Sender (2) eine relative Drehbewegung um den Empfänger (1) ausführt, wobei ein Signal in Richtung auf die Person (41) für mehrere Positionen (j) des Empfängers auf dem relativen Drehkreis (40) gesendet wird, wobei die von Punkten (k) eines Objekts reflektierten und vom Empfänger (2) an den Positionen (j) empfangenen Signale zu Verarbeitungsmitteln (23) zum Bilden eines Radarbildes (Im (x, y)) gespeist werden, **dadurch gekennzeichnet, dass** die Signale Mikrowellensignale sind, wobei die Vorrichtung Laser-Entfernungsmesser (24) umfasst, die sich um den Sender (2) und den Empfänger (1) in Rotation befinden, zum Ermitteln der Distanz zwischen der Person (41) und der Vorrichtung, wobei das vom Sender gesendete Signal in einer Ebene fokussiert wird, in der sich die Person befindet.

3. Vorrichtung nach Anspruch 1, **dadurch gekennzeichnet, dass** der Empfänger (1) an einer Drehscheibe (5) in einem gegebenen Abstand von der Mitte der Scheibe befestigt ist, wobei sich der Sender (2) im Wesentlichen in der Mitte der Scheibe befindet.

4. Vorrichtung nach Anspruch 2, **dadurch gekennzeichnet, dass** der Sender (2) an einer Drehscheibe (5) in einem gegebenen Abstand von der Mitte der Scheibe befestigt ist, wobei sich der Empfänger (1) im Wesentlichen in der Mitte der Scheibe befindet.

5. Vorrichtung nach einem der vorherigen Ansprüche, **dadurch gekennzeichnet, dass** der Sender (2) mit zwei Polarisationen (53, 54) sendet, wobei die Natur eines Objekts in Abhängigkeit von der Polarisation der reflektierten Signale definiert wird.

6. Vorrichtung nach einem der vorherigen Ansprüche, **dadurch gekennzeichnet, dass** die Sendequelle (1) im Millimeterfrequenzband sendet.

7. Vorrichtung nach Anspruch 6, **dadurch gekennzeichnet, dass** die Quelle auf einer Frequenz von 77 GHz sendet.

8. Vorrichtung nach einem der Ansprüche 3 bis 7, **dadurch gekennzeichnet, dass** die Scheibe vom Laserscheibentyp ist.

9. Vorrichtung nach einem der Ansprüche 3 bis 8, **dadurch gekennzeichnet, dass** die Scheibe von einem bürstenlosen Synchronmotor (2) in Drehung versetzt wird.

10. Vorrichtung nach einem der vorherigen Ansprüche, **dadurch gekennzeichnet, dass** der Sender (2) eine Diode des Gunn-Typs als Sendequelle umfasst.

11. System zum Erkennen von von einer Person getragenen Objekten, **dadurch gekennzeichnet, dass** es wenigstens zwei Verrichtungen (30) nach einem der vorherigen Ansprüche umfasst.

12. System nach Anspruch 11, **dadurch gekennzeichnet, dass** es drei über einen Kreis verteilte Verrichtungen (30) umfasst, wobei die Erkennung innerhalb des Kreises erfolgt.

**Claims**

1. A device for detecting at least one object carried by an individual (41), comprising at least one signal transmitter (2) and one signal receiver (1), said receiver (1) performing a relative rotational movement about said transmitter (2), with a signal being transmitted toward said individual (41) for a plurality of positions (j) of said receiver on the circle of relative rotation (40), with the signals reflected by points (k) of an object and received by said receiver (2) at said positions (j) being fed to processing means (23) for forming a radar image (Im (x, y)), **characterised in that** said signals are microwave signals, said device comprises laser telemeters (24), located about said transmitter (2) and said receiver (1) in rotation, for determining the distance from said individual (41) to said device, with the signal transmitted by said transmitter being focussed in a plane that contains said individual.

2. The device for detecting at least one object carried by an individual (41), comprising at least one signal transmitter (2) and one signal receiver (1), said transmitter (2) performing a relative rotational movement about said receiver (1), with a signal being transmitted toward said individual (41) for a plurality of positions (j) of said receiver on the circle of relative rotation (40), with the signals reflected by points (k) of an object and received by said receiver (2) at said positions (j) being fed to processing means (23) for forming a radar image (Im (x, y)), **characterised in that** said signals are microwave signals, said device comprises laser telemeters (24), located about said transmitter (2) and said receiver (1) in rotation, for determining the distance from said individual (41) to said device, with the signal transmitted by said transmitter being focussed in a plane that contains said individual.

3. The device according to claim 1, **characterised in that** said receiver (1) is fixed to a rotary disk (5) at a given distance from the centre of said disk, with said transmitter (2) being substantially located at the centre of said disk.

4. The device according to claim 2, **characterised in that** said transmitter (2) is fixed to a rotary disk (5) at a given distance from the centre of said disk, with said receiver (1) being substantially located at the centre of said disk.

5. The device according to any one of the preceding claims, **characterised in that** said transmitter (2) transmits with two polarisations (53, 54), with the nature of an object being defined as a function of the polarisation of the reflected signals.

6. The device according to any one of the preceding claims, **characterised in that** the transmission source (1) transmits in the millimetric frequency band.

7. The device according to claim 6, **characterised in that** said source transmits at a frequency of 77 GHz.

8. The device according to any one of claims 3 to 7, **characterised in that** said disk is of the laser disk type.

9. The device according to any one of claims 3 to 8, **characterised in that** said disk is set into rotation by a brushless synchronous motor (2).

10. The device according to any one of the preceding claims, **characterised in that** said transmitter (2) comprises a diode of the Gunn type as a transmission source.

11. A system for detecting objects carried by an individual, **characterised in that** it comprises at least two devices (30) according to any one of the preceding claims.

12. The system according to claim 11, **characterised in that** it comprises three devices (30) distributed over a circle, with the detection occurring inside said circle.

RECEPTION 3

EMISSION

1

2

5

4

FIG.1

30

35

33

32

34

31

FIG.3

FIG.2a

FIG.2b

EP 2 217 944 B1

FIG.4

**FIG.5**

**FIG.6a**

**FIG.6b**

FIG.7

FIG.8

FIG.9b

FIG.9a

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5501222 A